# EUROPEAN PATENT APPLICATION

(11) **EP 0 895 422 A2**
(43) Date of publication of application: **03.02.1999**
(21) Application number: 98202090.1
(22) Date of filing: 28.02.1995
(51) Int. Cl.: H04N 7/24

(54) **Image formatter for processing encoded video data**

(30) Priority: 24.03.1994 GB 9405914; 29.07.1994 GB 9415365; 29.07.1994 GB 9415391; 29.07.1994 GB 9415413; 29.07.1994 GB 9415387
(62) Divisional of application: 95301272.1
(71) Applicant: Discovision Associates, Irvine, CA 92614 (US)
(72) Inventor: Jones, Anthony M., Yate, Bristol BS17 5TF (GB); Robbins, William Philip, Cam, Gloucestershire GL11 5PE (GB); Patterson, Donald William Walker, Redland, Bristol BS6 7JW (GB); Wise, Adrian Philip, Frenchay, Bristol BS16 1NA (GB); Finch, Helen Rosemary, Gloucestershire GL12 7ND (GB); Sotheran, Martin William, Gloucestershire GL11 6BD (GB)
(74) Representative: Vuillermoz, Bruno

(57) **Abstract**

An image formatter for processing encoded video data comprising :
an input element for receiving encoded data having a frame rate and an arrival rate ;
a memory defining at least three buffers for storage of the encoded data, one of said buffers being a display buffer, and another of said buffers being an arrival buffer ;
a write address generator for generating write addresses for data being stored thereat in said memory ;
a read address generator for generating read addresses for reading data stored thereat in said memory ;
an output interface linked to said read address generator that produces decoded data at a display rate ; and
   a buffer manager responsive to said arrival rate, said display rate, and said frame rate for allocating said buffers to said write address generator and said read address generator, wherein said buffers are allocated to said write address generator in response to a timing regime

## Description

The present invention relates to random access memory (RAM), and more particularly, to a method and apparatus for interfacing with RAM.

### BRIEF DESCRIPTION OF THE DRAWINGS

Figure 1 is a system block diagram of an apparatus that employs the method of the present invention to access a synchronous DRAM.
Figure 2 is a diagram of the interrelation between the high level commands received, and the low level commands generated, by the state machine of figure 1.
Figure 3 is a pictorial representation of the organization of the DRAM of figure 1.
Figure 4 is a pictorial representation of the organization of words stored in cells in the DRAM of figure 1.
Figure 5 depicts an image, displayed on a television or monitor screen, composed of cells that are aligned in a rectangular grid, and one unaligned cell superimposed over the aligned cells.
Figure 6 depicts the arrangement of pixels within each cell of figure 5, each cell being an exemplary eight pixel by eight pixel block.
Figure 7 depicts data words representing each pixel of figure 6.
Figure 8 depicts the relationship between an unaligned cell and the pixels in underlying aligned cells.
Figure 9 is a pictorial diagram mapping the cells of figures 5 or 8 onto the RAM banks of figure 6.
Figure 10 is a block diagram of a RAM system having two banks of RAM and used to store data words of figure 7.
Figure 11 is a pictorial representation of a video decoder that includes the RAM system of figure 10, and provides digital video to the screen of figure 5.
Figure 12 depicts a cell of figures 5 or 8 being further partitioned into subcells, and the relationship between subcells and the RAM banks of figure 10.
Figure 13 is a block diagram of the Microcodable state machine.
Figure 14 is a block diagram of the Arithmetic Core.
Figure 15 is a functional diagram of the Register File.
Figure 16 is a block diagram of data flow in the Register File.
Figure 17 is a block diagram of Register File address decoding.
Figure 18 is a fixed width word to be used for addressing, having a width defining field and an address field.
Figure 19 is a fixed width word to be used for addressing, having an address field, a substitution field and a substitution indicator.
Figure 20 is an example of a 13 bit word to be used to address 8 bit data in a 64 x 32 RAM.
Figure 21 is an example of a fixed width word having fields.
Figure 22 is a block diagram of a DRAM interface embodying this invention; and

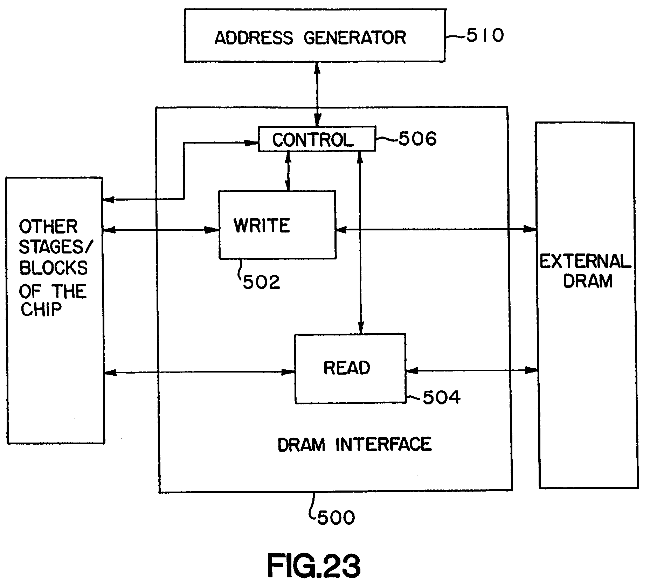

Figure 23 is a block diagram of a DRAM interface having one write swing buffer and one read swing buffer.
Figure 24 is a block diagram of an image formatter.
Figure 25 is a diagram of the buffer manager state machine.
Figure 26 illustrates the main loop of the state machine In Figure 25.

### DETAILED DESCRIPTION OF THE PREFERRED EMBODIMENT

One aspect of the present invention is directed to a method for accessing RAM. In particular, the method of the invention accesses from a RAM a number M of words that is less than the predetermined fixed burst length N of the RAM. The RAM includes an enable line that selectably enables and disables reading from and writing to the RAM. In the method, first N words are ordered to be read from or written to the RAM. Next it is determined when M words have been read from or written to the RAM, M being less than N. Finally, the RAM is disabled upon determining M words had been read from or written to the RAM.

Another aspect of this invention discloses a method for accessing Dynamic Random Access Memory (DRAM) to store and retrieve data words associated with a two dimensional Image. The DRAM includes two separate banks, a first bank and a second bank. Each bank is capable of operating in page mode to read and write the data words. The two dimensional image is organized In a two dimensional grid pattern of cells, each cell containing an M by N matrix of pixels. The words associated with each cell occupy one page or less of a bank. Each cell is assigned a particular one of the two banks so that all data words associated with that particular cell are read from and written to one particular page of that particular bank. The assignment of banks to cells is done such that each cell is associated with a different bank than any bordering cell which is also either in the same or in the same column. There is then read the data words associated with a cell that is composed of a matrix of pixels, and that is not aligned with the two dimensional grid pattern, but that is aligned with pixels in cells in the two dimensional grid pattern.

In accordance with another aspect of the invention, the data words associated with the unaligned cell are read by first reading, from the first bank of DRAM, the data words associated with one of the cells in the grid pattern identified as containing data words associated with the unaligned cell. Then there are read, from the second bank of DRAM, the data words associated with another of the cells in the grid pattern containing data words associated with the unaligned cell. Alternate readings between the first and second banks are continued until all the data words associated with the unaligned cell have been read.

In accordance with another aspect of the invention, the data words associated with the unaligned cell are read by first reading, in a predetermined order of cells, the data words associated with each cell in the grid pattern containing data words associated with the unaligned cell. The predetermined order of cells is chosen such that data words read from succeeding cells are read from alternating banks.

In accordance with another aspect of the invention, the predetermined order is a clockwise rotation of cells in the grid pattern identified as containing data words associated with the unsigned cell. Alternately, the predetermined order is a counterclockwise rotation of cells in the grid pattern identified as containing data words associated with the unaligned cell.

Another aspect of this invention relates generally to a method and apparatus for addressing memory and, in particular, to using a fixed width word having a fixed number of bits to be used for addressing variable width data and address substitution.

In accordance with another aspect of the invention there is provided a method for buffering encoded video data organized as frames comprising determining the picture number of a frame, determining the desired presentation number of a frame and marking the buffer as ready when the picture number is on or after the desired presentation number.

In accordance with another aspect of this invention, there is provided a RAM interface for connecting a bus to RAM comprising means for receiving from the bus a plurality of data words, means for receiving from the bus an address associated with the plurality of dab words, means for generating a series of addresses in RAM into which the buffered datawords will be written, the series of addresses being derived from the received address and means for writing the buffered data words into RAM at the generated address. The data word receiving and buffering means may include a swing buffer. The RAM may operate in a page addressing mode and the address generating means may include means for generating row addresses and means for generating column addresses based on the received address. The RAM may be a DRAM, the bus may include a two wire interface, the data word receiving and buffering means may include a two wire interface, the address receiving means may include a two wire interface and the plurality of data words as well as the received address may be in the form of a token. The RAM interface may further include means for determining whether the data word receiving means has received and buffered the plurality of data words.

The invention also provides a RAM interface for connecting a bus to RAM comprising a plurality of data words stored in RAM at predetermined addresses, means for receiving from the bus a RAM address associated with the plurality of data words, means for generating a series of RAM addresses for addressing the plurality of data words in RAM, the series of addresses being derived from the received address, means for buffering data words read from RAM and means for reading from RAM the plurality of data words, using the series of RAM addresses generated by the address generating means, and writing the data words into buffer means. The data word buffering means may include a swing buffer. The RAM may operate ins page addressing mode and the address generating means may include means for generating row addresses and means for generating column addresses based on the received address. The RAM may be a DRAM, the bus may includes two wire interface, the data word receiving and buffering means may include a two wire interface, the address receiving means may include a two wire interface and the plurality of data words as well as the received address may be in the form of a token. The RAM interface may further include means for determining whether the data word receiving means has received and buffered the plurality of data words.

The above features of the present invention can be grouped into five categories, each of which is discussed separately herein. The five categories are:
Method for Accessing JEDEC Synchronous DRAM;
Methods for Accessing Banks of DRAM;
Fixed Width Word for Addressing Variable Width Data;
Buffer Manager; and
RAM Interface.

### METHOD FOR ACCESSING SYNCRONOUS DRAM

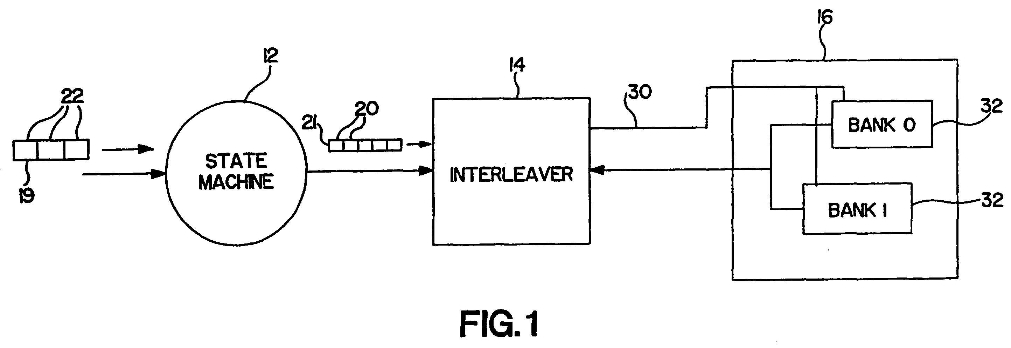

Referring now to figure 1, there is shown a block diagram of a system 10 for implementing the method of the present invention. System 10 Includes state machine 12, interleaver 14, and synchronous DRAM 16. DRAM 16 includes two banks 32. Interleaver 14 controls access (e.g., read and write) to DRAM 16. Interleaver 14 includes counter (not shown) that tracks which bank 32 was most recently accessed, allowing interleaver 14 to easily toggle between banks 32.

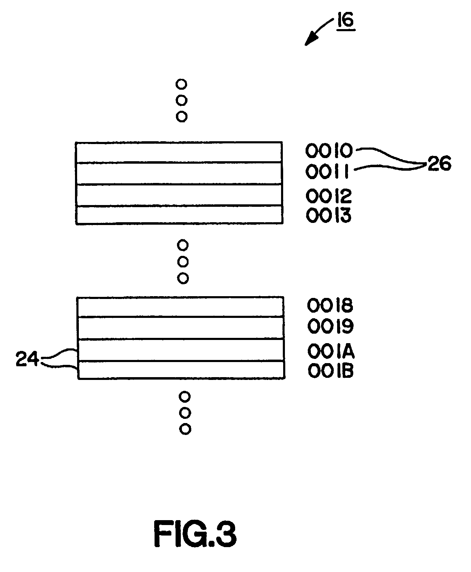

Referring now to figures 1, 2, and 3, upon receipt of a string 19 of high level commands 22 addressed to the same bank 32 of DRAM 16, state machine 12 generates a string 21 of optimized low-level commands 20 (i.e., the seven commands specified by JEDEC, and listed above) addressed to the same bank 32. Upon receipt of string 21, interleaver 14 performs the requested actions.

High level commands 22 are READ 22-1, WRITE 22-2, EXTEND 22-3, INTERRUPT 22-4 and REFRESH 22-5. (Commands 22 are printed in all capital letters to readily distinguish them from low-level commands 20.) In brief, the operation of READ 22-1, WRITE 22-2 and REFRESH 22-5 commands is essentially the same as their low-level command 20 namesakes. EXTEND 22-3 acts to repeat the actions of the previous WRITE 22-2 or READ 22-1 command. INTERRUPT 22-4 is needed as a result of the burst length being fixed at four words 24, as discussed further below. Taken together, commands 22 provide a powerful programming tool.

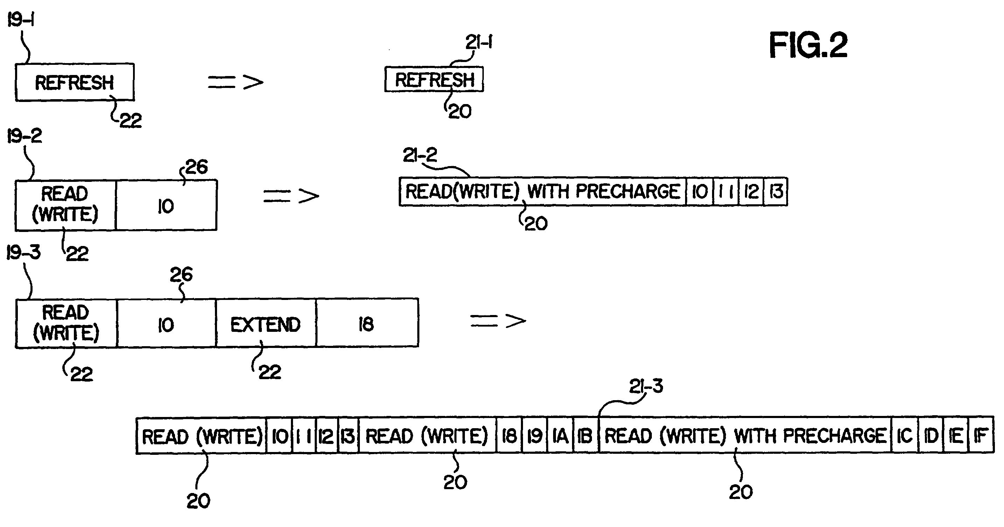

Before studying examples of how commands 22 simplify the task of accessing DRAM 16, commands 22 themselves should be examined in more detail. The first high-level commend 22 of high-level command string 19 is either READ 22-1 or WRITE 22-2. The first low-level command 20 of the corresponding low-level command string 21 is always active command 20. Each READ or WRITE command 22 orders four sequential words 24 to be read or written, respectively. As shown in figure 2, each READ or WRITE command 22 is accompanied by the address 26 (in the particular bank 32 being accessed) of the first word 24 of the four sequential words 24. (Note that under the JEDEC standard, this first word 24 must be an even count.)

When DRAM 16 is in "automatic precharge mode," if the READ or WRITE command 22 is the last command 22 in string 19 (i.e., if the next command to state machine 12 is addressed to the other bank 32 of DRAM 16), then state machine 12 will issue a read or write with precharge command 20, followed by the requisite addresses 26 of the appropriate four sequential words 24. Otherwise, state machine 12 will generate a read or write command 20, followed by the requisite addresses 26. For example, If in automatic precharge mode the last command 22 in string 19-2 is READ 22-1 with address 26 of 10, the corresponding string 21-2 will be read with precharge command 20, followed by addresses 26 of 10, 11, 12 and 13.

In figure 2, EXTEND 22-3 is shown at the end of string 19-3, following READ (WRITE) command 22. Like READ and WRITE commands 22, the format of EXTEND 22-3 includes the address 26 of the first word 24 in a sequence of four words 24. In the automatic precharge mode, when EXTEND 22-3 occurs at the end of a string 19, as in string 19-3, an additional read (write) with precharge is added to string 21.

Another aspect of the invention fixes the burst length at four words 24, saving the complexity needed to support a dynamically varying burst length. To handle the two word transfers required by the JEDEC standard, INTERRUPT 22-4 is provided. Referring now to figure 1, 2 and 3, INTERRUPT 22-4 causes state machine 12 to begin a four word 24 long low-level command 20 read (or write). However, after two words 24 have been read (or written), state machine 12 causes enable line 30 to banks 32 to go low, disabling banks 32. In this manner, although state machine 12 issues low level command 20 for a four word 24 read (or write), only two words 24 are actually read from (or written to) banks 32.

Of course, after enable line 30 is dropped low, another two clock cycles are required to complete the now ineffective read (or write) command 20. But this approach saves having to deal with two words 24 of unwanted data, while allowing the burst length to be fixed at four words 24.

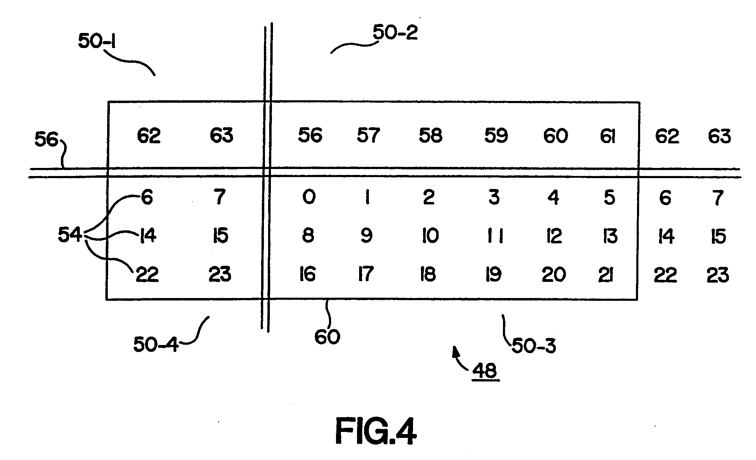

Referring now to figures 1, 2, 3 and 4, in figure 4 there is a diagram portraying how words 24 are stored within banks 32. Figure 4 shows a portion 48 of a two dimensional array of cells 50, each cell 50 including an M by N matrix of words 24, each word being represented by a number 54 that serves as the address of the word 24 within the cell 50. In particular, each cell 50 is shown as being eight rows by eight columns of words 24. Cells 50 are aligned according to grid pattern 56.

Superimposed on cells 50 is a cell 60 that represents a desired new cell to be created by reading words 24 from the underlying cells 50 (for storage in another portion of DRAM 16). Cell 60 is aligned with words 24, but that is not aligned with grid pattern 56. All 60 overlies cells 50-1, 50-2, 50-3 and 50-4. Cells 50-1 and 50-3 contain words 24 stored in the same bank 32 (e.g., bank0), but possibly on different pages. Similarly, cells 50-2 and 50-4 contain words 24 stored in the other bank 32 (e.g., bank1), but possibly on different pages.

To read the appropriate words 24 from cell 50-1, one could use the following string 19 of high-level commands 22:
READ(62,x),INTERRUPT(62,62).
The corresponding string 21 of low-level commands 20 would be:
active(bank0), read(62,63), read(62,63), read and precharge(62,63).

To read the appropriate words 24 from cell 50-4, one could use the following high-level commands 22:
READ(6,x),INTERRUPT(14,22).
The corresponding string 21 of low-level commands 20 would be:
active(bank1), read(6,7), read(14,15,don't care,don't care) read and precharge(22,23,don't care,don't care).

To read the appropriate words 24 from cell 50-3, one could use the following high-level commands 22:
READ(0,x), EXTEND(8,x), EXTEND(16,x), EXTEND(4,x), INTERRUPT(12,20).
The corresponding string 21 of low-level commands 20 would be:
active(banko), read(0,1,2,3), read(8,9,10,11), read(16,17,18,19), read(4,5), read(12,13), read and precharge(20,21,don't care, don't care).

While the invention has been described with reference to the structures and methods disclosed, it is not confined to the specific details set forth, but is intended to cover such modifications or changes as may come within the scope of the following claims.

### METHODS FOR ACCESSING BANKS OF DRAM

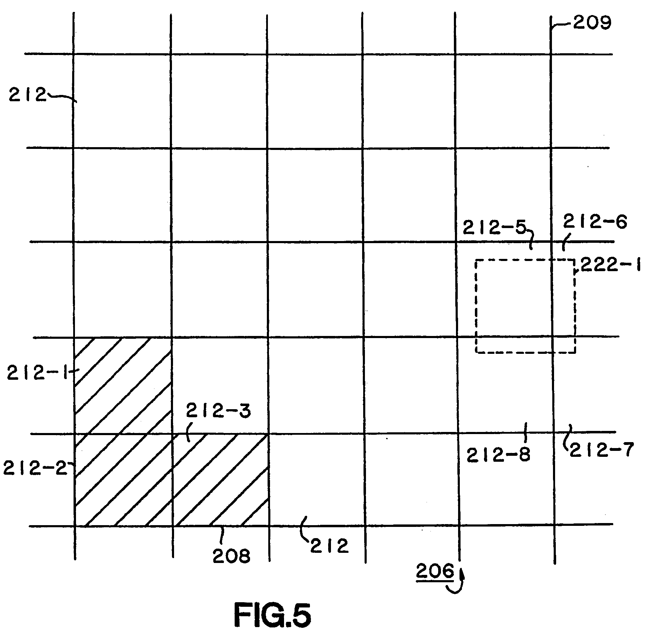

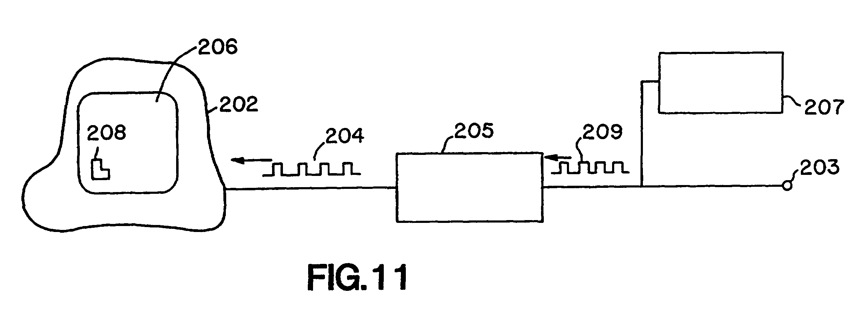

Referring now to figures 5, 6, and 11, figure 11 shows a video monitor 202 having a display screen 206 suitable for displaying images 208 rendered from digital video 204. The source of digital video 204 is video decoder 205. Video decoder 205 includes suitable decoding circuitry (not shown). Video decoder 205 decodes encoded video 209. Typical sources of encoded video 209 include CD or laser disc player 207, or cable television hook-up 208.

In figure 5 there is shown a portion of a display screen 206, including image 208. Images such as image 208 are composed of pixels 214. Typically pixels 214 are grouped into cells 212. By grouping pixels 214 into cells 212, the digital video 204 representing image 208 (as well as the rest of display screen 6) can be manipulated (e.g., compressed) more efficiently.

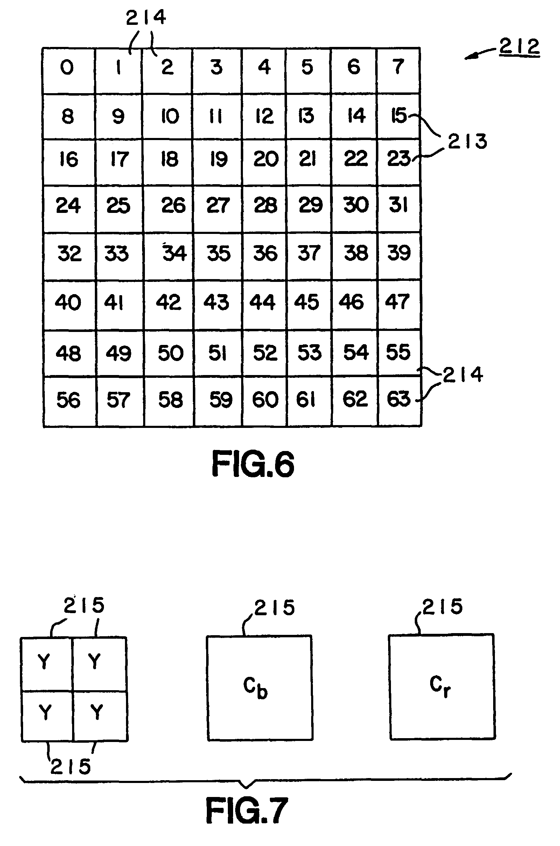

While cells 212 could be arranged in any repeating pattern, typically cells 212 are arranged in the pattern of a rectilinear grid 209. The pattern of grid 209 extends across display screen 206. Within each cell 212, pixels 214 typically are arranged in square matrix of N rows by N columns. For example, in figure 6 cell 212 consists of eight row by eight columns of pixels 214. Associated with each pixel 214 is an identifying position number 13 (from 0 to 63). Alternately, pixels 214 could be grouped in a non-square matrix (i.e., M rows by N columns, where M does not equal N).

Referring now to figures 5, 6, and 7, digital video 204 includes a number of data words 215. In the MPEG digital video standard, six data words 215 are required to represent each region of four pixels 214: One word 215 represents Cb, one word 215 represents Cr, and four words 215 represent Y (luminance).

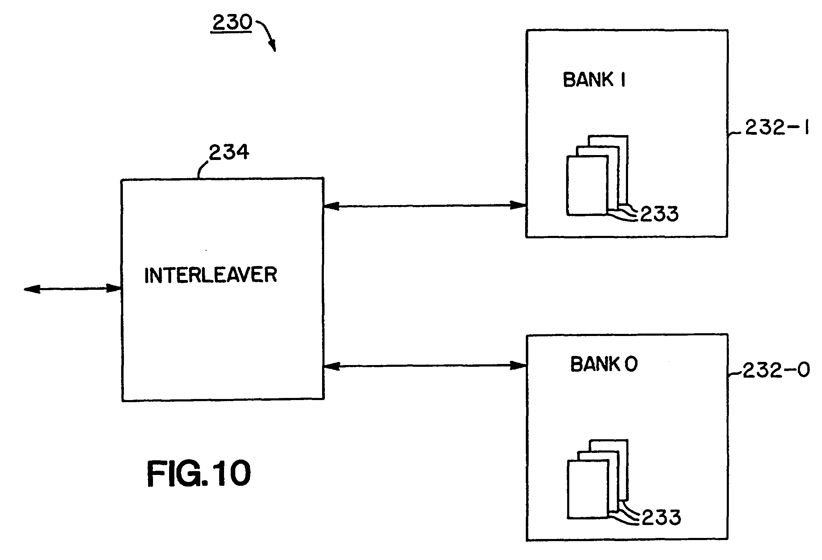

Referring now to figures 5, 7, 10 and 11, video decoder 205 includes RAM system 230. RAM system 230 is the memory video decoder 205 uses to store data words 215. Video decoder 205 reads words 215 from RAM system 230 in the course of creating, displaying, and manipulating image 208 on screen 206. RAM system 230 includes interleaver 234 and two banks 232 of RAM, bank0 232-0 and bank1 232-1. Interleaver 234 connects banks 232 to the portion (not shown) of video decoder 205 that is used to create, display, and manipulate images 208. In banks 232, data words 215 are stored in pages 233, which are represented in figure 10 as overlapping rectangles. A typical see for a page 233 is 1024 eight bit words.

Referring now to figures 5, 6 and 8, one requirement of video decoder 205 is the ability to read a cell 222 that is not aligned to the existing cell grid 209. Instead, cell 222 is aligned to pixels 214 within cells 212. This ability to read unaligned cells 222 is required for searching image 208 for features, or for detecting motion between successive images 208.

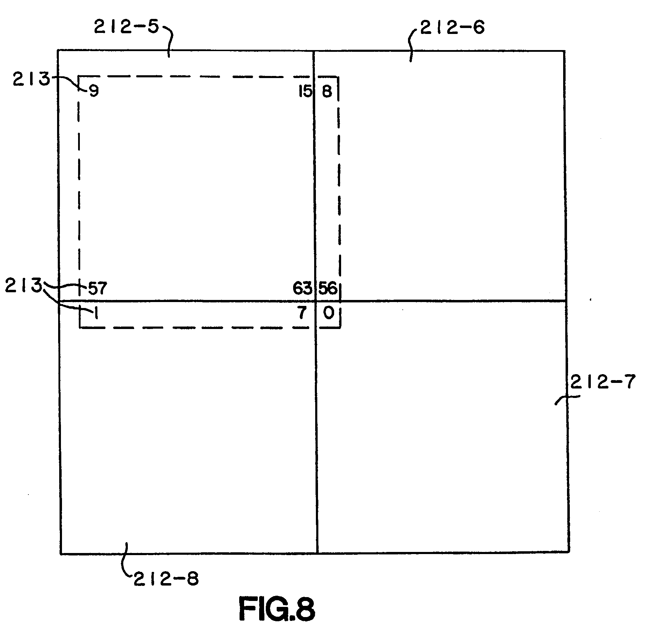

Referring now to figures 5 and 8, in figure 5 there is shown a cell 222-1 to be read from RAM system 230. Cell 222-1 is not aligned with grid 209, but is aligned to the pixels 214 of cells 212. Cell 222-1 is shown in dotted lines, and can be seen to overlap four calls 212, 212-5, 212-6, 212-7, and 212-8.

In figure 8 there is shown a more detailed representation of how unaligned read cell 222-1 overlaps underlying cells 212-5, 212-6, 212-7 and 212-8. The numbers 26 within cell 222-1 represent the numbers 13 of the pixels 214 at the boundary between cell 222-1 and each underlying cell 212. Note that unaligned read cell 222-1 largely consists of pixels 214 drawn from a single underlying cell 212-5. The number . of pixels 214 drawn from cells 212-6, 212-8, and 212-7 are seven, seven and one, respectively. Forty-nine pixels are drawn from cell 212-5.

In figures 5 and 8, rectilinear grid 209 is shown without showing how pages 233 containing the data words 215 representing each cell 212 are interleaved. Conceivably the respective pages 233 associated with all of the cells 212 underneath a particular unaligned read cell 222 could be in the same bank 232 of RAM system 230. If so, creating the unaligned read cell 222 would, in the worst case, involve accessing four pages 233 from the same bank 232, a process that requires dead time to precharge that bank 232 three times. For all unaligned cells 222 on image 8, the worst case must appear; Searching or matching do not specify where unaligned cell 222 is, and hence can always be the worst case.

Much better than accessing four pages 233 from the same bank 232 is to access two pages 233 from each bank 232, a process that maximizes interleaving possibilities. The question now becomes how to deal with cases like the example of figure 8, in which most of the pixels 214 of the unaligned read cell 222-1 are drawn from a single underlying cell 212-5, leaving little time to precharge while performing the relatively short reads needed to read data from the pages 233 associated with the other three underlying cells 212-6, 212-7 and 212-8. Another difficult case has the unaligned read cell 222 overlying substantial portions of two cells 212, and insubstantial portions of another two cells 212.

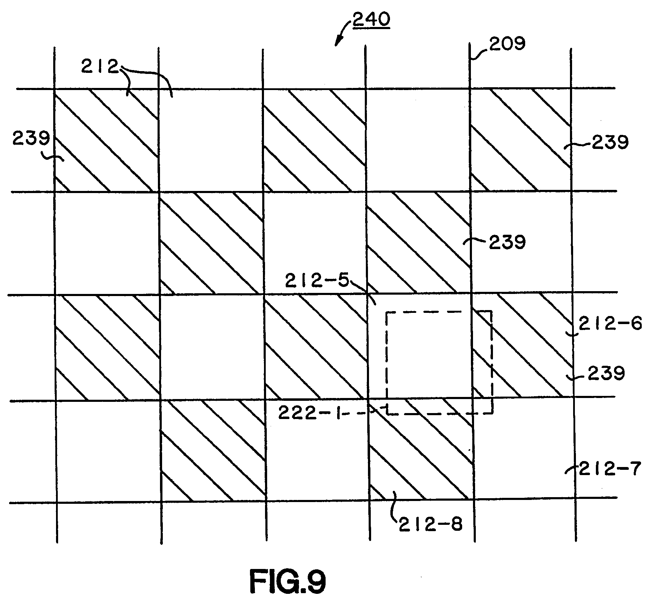

In accordance with the invention, the problem of relatively short read times is reduced by interleaving in a particular two-dimensional pattern 240 the pages 233 associated with cells 212. Referring now to figures 9 and 10, in figure 9 half of the cells 212 are shown with hatching 239, and half of the cells 212 lack hatching 239. The presence of hatching 239 on a cell 212 signifies that the page 233 associated with that particular cell 212 resides in bank0 232-0. The absence of hatching 239 on a cell 212 signifies that the page 233 associated with that particular cell 212 resides in bank1 232-1. For example, cell 212-6 is shown hatched, so the page 233 associated with the data words 215 that describe cell 212-6 are stored in bank0 232-0, and so must be read from bank0 232-0.

In accordance with the invention, the problem of relatively short read times is reduced by having interleaver 234 interleave pages 233 into banks 232 based on a particular two dimensional pattern 240 of cells 212 associated with pages 233. As shown in figure 9, pattern 240 resembles a checkerboard: No two sequential cells 212 in the same row of grid 209 have their associated page 233 in the same bank 232, and no two sequential cells 212 in the same column of grid 209 have their associated page 233 in the same bank 232.

Checkerboard pattern 240 maximizes interleave possibilities by ensuring that when unaligned read cell 222 overlies four cells 212, the pages 233 of two of the overlaid cells 212 are stored in one bank 232, while the pages 233 associated with the other two overlaid cells 212 are stored in the other bank 232. For example, in figure 9, cells 212-5 and 12-7 have their associated pages 233 stored in bank1 232-1, while cells 212-6 and 12-8 have their associated pages 233 stored in bank0 232-0.

For maximum interleave efficiency, pages 233 should be read from alternate banks 232. This is ensured by reading from the four cells 212 underlying an unaligned read cell 222 in either a clockwise order, or in a counter-clockwise order. As an example of the method of reading in the clockwise direction, consider the four cells 212 underlying cell 222-1 in figure 9. First, the page 233 associated with cell 212-5 would be read from bank1 232-1 by interleaver 234. Then the page 233 associated with cell 212-6 would be read, since cell 212-6 is positioned in the same row as cell 212-5, and to the right of cell 212-5. Next the page 233 associated with cell 212-7 would be mad, since cell 212-7 is in the same column as cell 212-6, and below cell 212-6. Finally the page 233 associated with cell 212-8 would be read, since cell 212-8 is in the same row as cell 212-7, and to the left of cell 212-7.

Simulations have shown that the checkerboard pattern 240 of interleaving banks 232 reduces dead time. The aspect ratio and see of checkerboard pattern 240 can be selected to be optimum for the particular application. The only requirement is that at least one cell 212 underlying an unaligned read cell 222 is represented by less than one page 233 of words 215. In this manner, each of the four possible reads of underlying cells 212 is self-contained, limiting the interleaving to the mechanism described. Any further fragmentation would involve a more complex interleaving algorithm and would cause longer dead times.

Note that sometimes each pair of possible reads of underlying cells 212 contains words 215 in the same page 233 (e.g., words 215 from cells 212-6 and 212-8 underlying unaligned read cell 222-1 many be contained on the same page 233). Therefore the reading of words 215 from pages 233 could be further optimized. However, the worst case scenario remains.

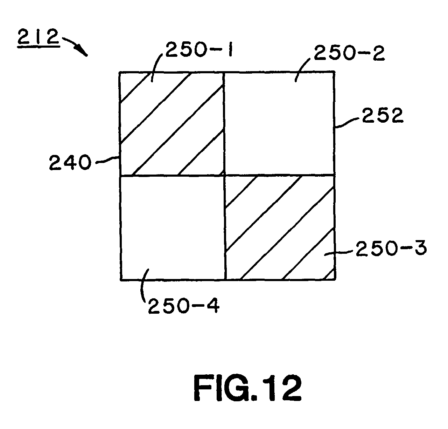

The method of the present invention can also be applied, with out any loss in performance, to cells 212 having dimensions (M by N) that require more data words 215 than can be stored in a single page 233. Referring now to figures 10 and 12, such a cell 212 is divided by subgrid 252 into subcells 250, with the dimensions of subcells 250 chosen so that the number of words 215 associated with each subcell 250 can be stored in a single page 233. As shown in figure 12, the same checkerboard pattern 240 can be applied to subcells 50 (e.g., subcells 250-1 and 250-3 stored in the same bank 232, and subcells 50-2 and 50-4 stored in the same bank 232), allowing the accessing of words 215 associated with each "oversized" cell 212 to be managed in the same efficient manner as cells 212 themselves are managed.

While the invention has been described with reference to the structures and methods disclosed, it is not confined to the specific details set forth, but is intended to cover such modifications or changes as may come within the scope of the following claims.

### FIXED WIDTH WORD FOR ADDRESSING VARIABLE WIDTH DATA

A method and apparatus for addressing memory is described herein. In particular, the process calls for using a fixed width word for addressing variable width data. In various forms of the embodiment, the fixed width word may contain a width defining field, an address field, or a substitution field. The length of the fixed width word is predetermined by the amount of memory to be addressed. The apparatus form of the present invention includes a microcodable state machine with an arithmetic core.

The microcodable state machine is intended to be used to solve design problems where there is a need for versatile and/or complicated calculations. Examples of such designs are; address generation, stream parsing and decoding or filter tap coefficient calculations. The addressing must cope with two different features, variable length addresses to access varying width portions of words and address substitution. In the present invention, a RAM having a 64 x 32 bit configuration can be addressed in partial words having 64 x 32 bit, 128 x 16 bit, 256 x 8 bit, 512 x 4 bit, 1024 x 2 bit, or 2048 x 1 bit formats.

British Patent Application entitled "Method and Apparatus for Video Decompression"filed on July 29, 1994, by DiscoVision Associates is hereby incorporated by reference.

In many applications it is useful to define variable portions of a word (to be known as fields) for actions such as substitution, variable width data addressing, or the constriction of other parts of the word. The conventional method for this would be to have an additional word (or words) to specify the width of the field (or fields) within the word. Below a method for encoding this information within the word itself will be described. This method has the advantages of saving bits in the overall definition of the word, simplifying decoding of the encoded word and providing a more intuitive view of what has been encoded. This encoding method is applicable if the variable width fields are most or least significant bit justified within the word.

Table 1-1 shows two examples of variable width fields (marked "F") least significant bit justified defined within a eight bit word, "w" marks other potential fields of these words.

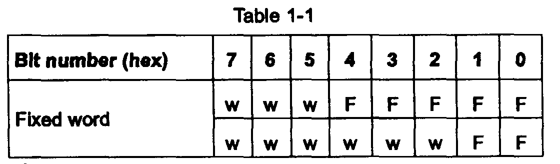

Table 1-2 shows the conventional method of encoding the fields shown in Table 1-1 by the addition of enough bits to specify the maximum width of the field in binary. (Bits marked "x" are "don't care" - a term of art). Too much space is taken up with this method.

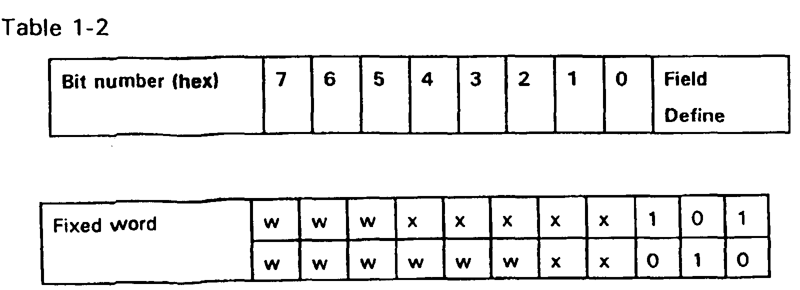

Table 1-3 show the encoding of the fields shown Table 1-1 using the new method. This method defines the field by the using a continuation marker and a termination marker. In this case the continuation marker is "1" and the termination marker is "0". The field is defined as all continuation markers from the justified end of the field (least significant in this case) until and including the termination marker. It is shown In Table 1-3 that to encode the field the space taken by a termination marker must be added to the fixed width word at the start of the field, this allows the definition of a zero length field by the additional space containing a termination marker.

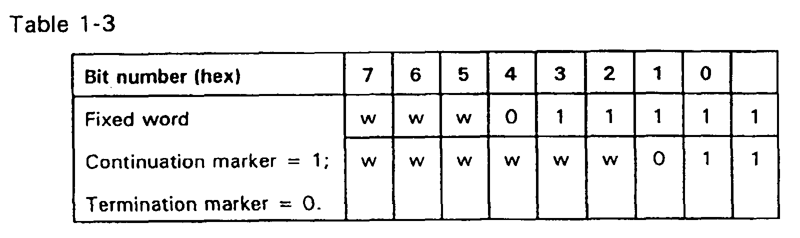

It can be seen that the advantages of this encoding method are:
1. A reduction in the number of bits needed in the encoding.
2. A simplification in the decoding required since the need for a "x to 1 of 2^{x}" decode of the "field define" shown in Table 1-2 that would normally be needed is inherent in the encoding which is already in the form 1 of 2^{x}.
3. The encoding is in a more intuitive form allowing the field defined to be easily identified.

The use of this encoding can be widened by stating that the termination marker and the continuation marker can be reversed to make the encoding of Table 1-3 resemble that of Table 1-4. In addition the use of "1" or "0" is used interchangeably throughout this application

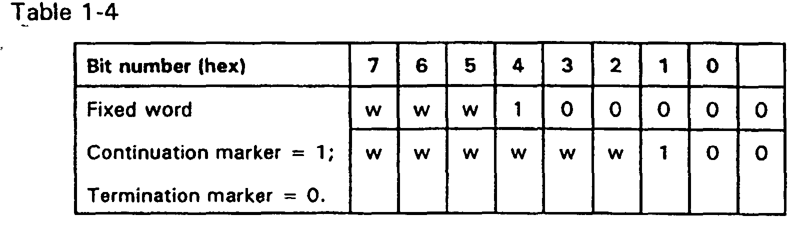

Fields may also be most significant bit justified such as shown in Table 1-5. These are encoded in a similar way to least significant bit justified fields simply that the field reaches from the most significant bit (hereinafter MSB) towards the least significant bit (hereinafter "LSB") up to and including the first termination marker. The encoding of the fields shown in Table 1-5 are shown in Table 1-6.

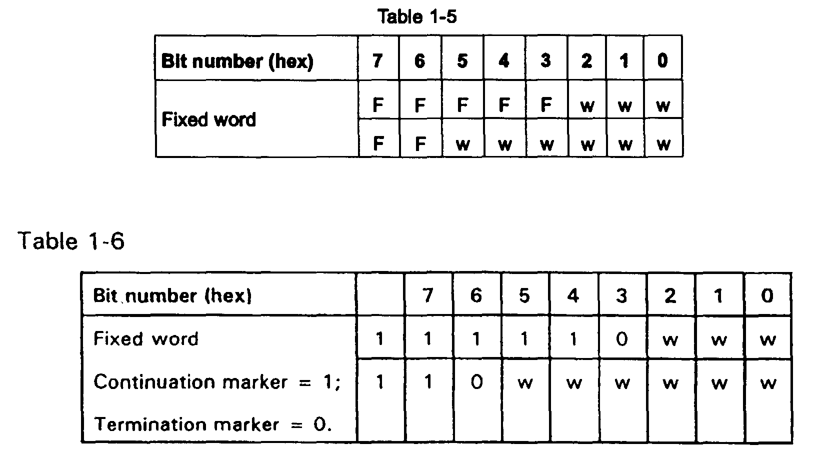

Finally fields may be encoded from the least significant and most significant ends of the word simultaneously. For example the two fields shown in Table 1-7 may be encoded as In Table 1-8, with the addition of just one bit for each field for the reason explained earlier.

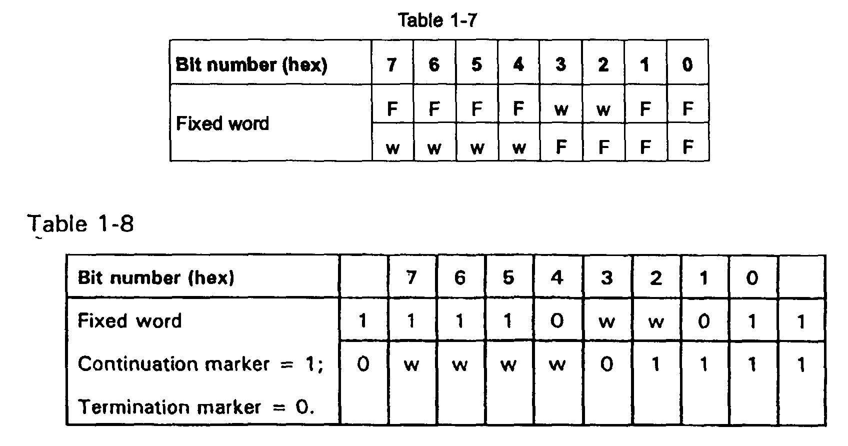

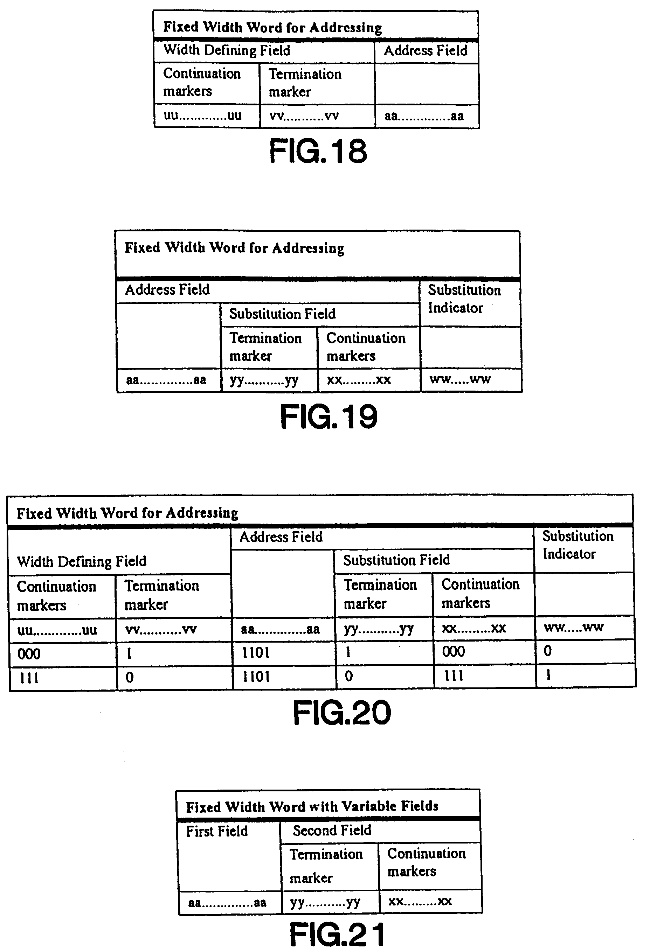

In Figure 21 the general above concept is illustrated. An address field, not necessarily used to address data has a field having a termination marker and a continuation marker. In this case the field is least significant bit justified.

There are situations in which it is useful to substitute part of a memory address by another value. In this way it is possible to construct a data dependent address. The encoding method can be applied to the addresses of a memory to specify what portion of the address is to be substituted. If a least significant bit justified variable length field is used in this address a substitution field can be defined. For example a 12 bit address Obaaaaaaaaaaaa encoded to have its five least significant bit substituted by the 12 bit value 0bcccccccccccc would be 0baaaaaaa011111 and produce the address Obaaaaaaaccccc. Table 1-9 show the encoding for substitution into a 1 2 bit address.

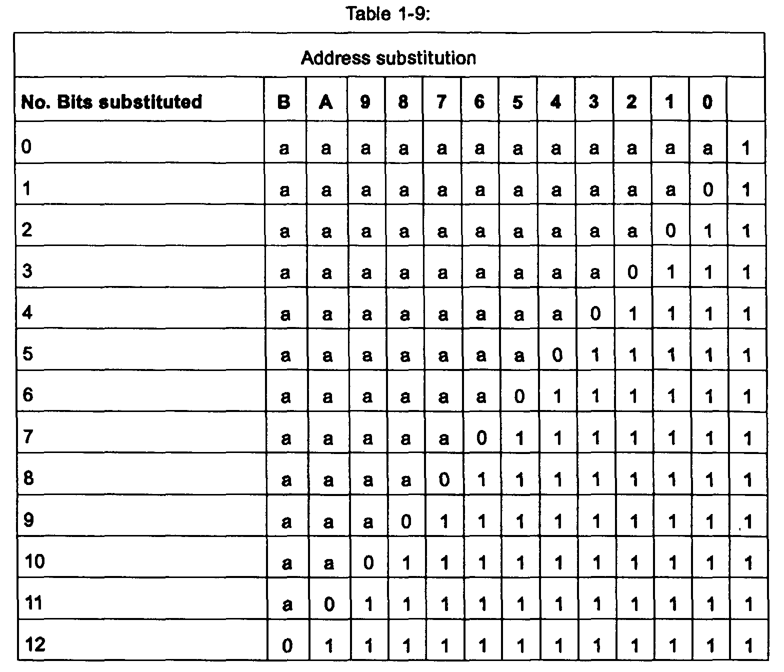

In Figure 19, a fixed width word for addressing having an address field with an optional substitution indicator. As mentioned above the substitution field has a variable size and will function to substitute an outside addressing source fora variable amount of address bits "a". The substitution occurs in place of the termination marker bit(s) "y" and continuation marker bit(s) "x".

The termination marker functions to inform the address decoding circuit where the substitution stops. The continuation marker pads the fixed width word.

If substitution is always to be used then there is no need for an indicator. However a substitution indicator allows optimal use of substitution.

One embodiment of the present invention is for addressing a memory which an be accessed at it full width or in 2ⁿ widths up to its full width (these smaller words are called partial words). It will be shown how the variable field encoding can be used to address this memory and to index those addresses into the memory.

To access a 64 x 32 bit Register file in widths of 32, 16, 8, 4, 2, and 1 bit requires different lengths of address. There are twice as many 16 bit locations as 32 bit locations and thirty-two times more 1 bit locations than 32 bit locations. Additionally up to eight bits of this address can be substituted by an index register. Thus a variable amount of information must be coded into a fixed number of microcode bits. One method would be to have a three bit field for the width and for the number of LSB's to be substituted and 12 bits for the address, giving a microode word of 18 bits. However a better method is to use a most significant justified variable length field to constrict the address its width can be defined, and thus the width of the access can be defined. For example a six bit address indicates a 32 bit access while a 12 bit address indicates a 1 bit access. This is illustrated in Table 1-10 where continuation marker is "0"; termination marker is "1"). It can be seen how the variable width field constricts the address "a..a" so defining its width and so the access width. The general case of a fixed width word for addressing is shown in Figure 18,

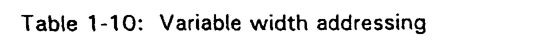

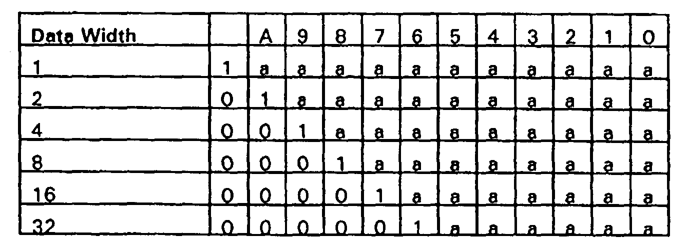

To allow indexing of address locations portions of the addresses "a..a" can be substituted by an alternative value. The substitution portion (or field) of the address can be defined by a least significant bit justified variable length field (The continuation marker "1"; termination marker "0") that is super imposed on top of those shown in Table 1-10. Using an address of an eight bit word an example Table 1-11 shows how to define the number of the least significant bits to be substituted. The least significant bit added is the substitution indicator (marked "w"). The general case of a Fixed width word for substitution is shown in Figure 20.

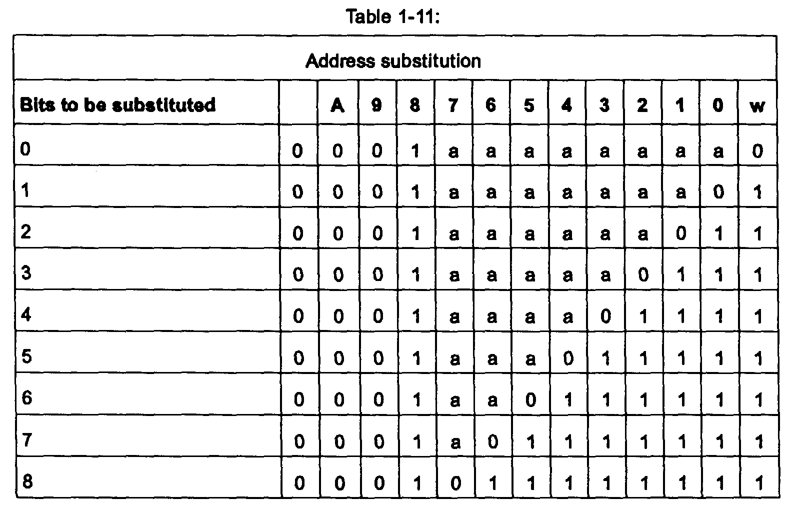

In effect the substitute code is superimposed on top a the address that is already coded.

From this coding it can be seen that there are illegal addresses, most obviously 0x0000 and Ox3fff, and in this case a "0" must be in the bottom 9 bits to prevent substituting more than 8 bits and a "1" in the top 6 bits to specify an allowable access width. If one of these errors is detected the access is undefined, but the Register file contents will not be affected.

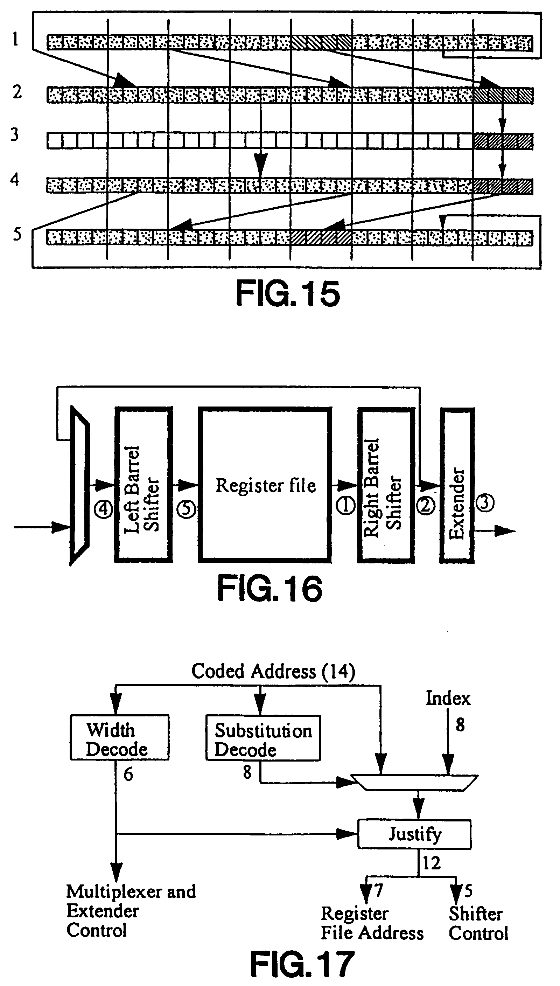

The apparatus for addressing and a method for accessing partial words in a register file will be discussed below. The conventional memory circuitry dictates that the memory must always be accessed at its full width. To achieve variable width accesses a full (32 bit) width word is read. This full word is rotated until the partial word accessed is justified in the LSB. The upper parts of the word are extended to the full width and then output. Extending may encompass padding with zeros or ones, sign extending, using the sign bit of a sign-magnitude number as the new MSB or any similar conventional method. Extending is dependent on the mode of operation. When the partial word is input to written back into the memory it is multiplexed back into the rotated full word, which is then rotated back and written into the array. Figure 15 show these steps for the access of a 4 bit partial word in the fourth four bit word of the 32 bit word.

To access or read partial words, such as the highlighted four bit word in row "1" of Figure 15, the full width word must be rotated to place the partial word at the LSB, as shown in row "2". As shown in row "3" the four bit word is extended to create a create full 32 bit word. This word can now be accessed.

A full width word that has been selected to be written back is truncated to the width of the original partial word which is multiplexed into the word shown in row "2" at the LSB position, this is shown in row "4". The resulting word is rotated back in its original significance in the read word, this is shown in row "5". This full word can now be written back into the register file.

The list below summarizes the steps numbered in the Figure 15.
1. Full word read from memory
2. 12 Bit rotate right puts partial word into the LSB
3. Extending to full word, then passed to output
4. The inputted partial word is multiplexed into rotated full word from (2)
5. 12 Bit rotate left puts full word back to original to be written.
The above accesses suggest the data flow structure of the memory that is shown in Figure 16. The numbers in the structure refer to the text above and to Figure 15.

The memory address must be decoded to control the above structure. It should be recognized that the MSB of any width of address is at the same significance with reference to the memory. The top six bits of a decoded address are a 32 bit word address, the remainder is a bit address. Therefore the stage of decoding (in parallel with the substitution) is to decode the address width defining variable field by detecting the position of the most significant termination marker. This allowing the address to be MSB justified (shifting in zeros at the LSB). The top six bits can be used directly as a 32 bit word row address the memory. The bottom five bits can be used to directly control both barrel shifters (as seen in Figure 16), because for example an original 32 bit address will always have a shift of 0b00000 (these having been shifted when the address was MSB justified) similarly a 16 bit address can have a shift of 0bx0000 i.e. 0 or 16 bit shift and a 1 bit address can have a shift of Obxxxxx i.e. 0 to 31 bit shifts. The extender and input multiplexer are controlled by the access width decode to mask out the output words and multiplex the input words to an appropriate significance respectively. The block diagram of the decode is shown in Figure 17. It can be seen that the decode of the two variable width fields for width and substitution can be done in parallel and independently.

Figure 20 represents an example of fixed width word 13 bits long for addressing variable width data and substitution as shown in the bottom two rows. For these examples an eight bit word would have been addressed at location 0b1101ssss, where "ssss" is substituted from another address source.

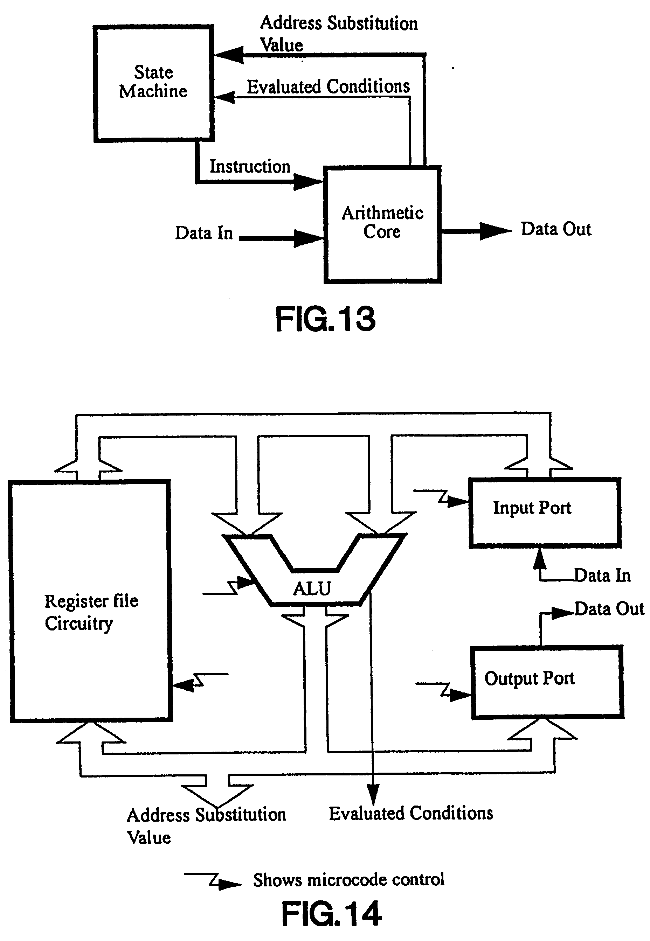

The substitution into a memory address and variable width accessing of a memory have been brought together in the implementation a a microcodable state machine the structure of which is shown in Figure 13. The structure is one of a state . machine controlling an arithmetic core by way of a wide word of control signals called a micrcoode instruction. The arithmetic core in turn passes status flags and some data to the state machine.

The state machine consists of a memory containing a list of the microcode instructions. As with conventional microcodable state machines it is capable of either proceeding through the list of microcode instructions continuously or any instruction can jump to any other. The jump address is in the form of Figure 19. The value substituted comes from the arithmetic core as shown in Figure 13 and 14. This allows the construction of "jump tables" within the micro code programs. Thus if a jump is made with 3 bits substituted, for example, there are a possible eight contiguous locations that may be jumped to dependent on the value from the arithmetic core, it has so become a programmable jump. The arithmetic core, as shown in Figure 14, is composed of a memory called a register file, an Arithmetic and Logic Unit (ALU), an input port and output port. These components are connected by busing and multiplexers. As previously stated these and the multiplexers defining their connections are entirely controlled by the microcode instruction issued by the state machine. The ALU and ports are conventional, but the register file is a memory that allows variable width index sccesses to it. The address to the register file is coded directly into the microcode instruction.

The advantages of using this method of addressing to the register file are firstly that many locations in application do not need to be the full width of the memory (32 bits in this case). Whilst it will cause no effect on the operation of the device to use a full width location it is very wasteful of memory locations. Minimizing the number of a memory locations used will minimize the space used by the memory, therefore minimize the capacitive loading in the register file and so maximize the speed of the register file. Secondly, the indexing combined with the variable width of memory accessing allows the stepping through of locations of variable width. In the one bit case this allows an elegant implementation of long division and multiplication.

In summary of the above, a procedure for addressing memory having the following steps is disclosed: providing a fixed width word having a predetermined fixed number of bits to be used for addressing variable width data, defining the fixed width word with a width defining field and an address field providing the width defining field with at least one bit to serve as the termination marker, defining the address field with a plurality of bits defining the address of the data, varying the size of bits in the address field in inverse relation to the size of the variable width data, varying the number of bits in the width defining field in direct relation to the size of the variable width data and maintaining a fixed width word for addressing variable width data while varying the width of the width defining field and the address field. In addition, a procedure for addressing memory having the following steps is disclosed: providing a fixed width word having a predetermined fixed number of bits to be used for addressing data, defining the fixed width word with an address field and a substitution field, defining the address field with a plurality of bits defining the address of the data, defining a variable width substitution field with at least one substitution bit, the substitution field has at least one bit to serve as a termination marker between the address field and the substitution field, using the substitution field to indicate substituted bits from a separate addressing source and maintaining a fixed width word for addressing variable width data while inversely varying the width of the address field and the width of the substitution field. In addition, a process for addressing variable width data in a memory having the following steps providing a memory having words of predetermined width and composed of partial words, rotating the partial word to be accessed to a least significant bit justification, extending remaining part of the word so that the accessed word will be recognized as the partial word, restoring the remaining part of the word and rotating the word until the partial word is restored to its original position.

### BUFFER MANAGER

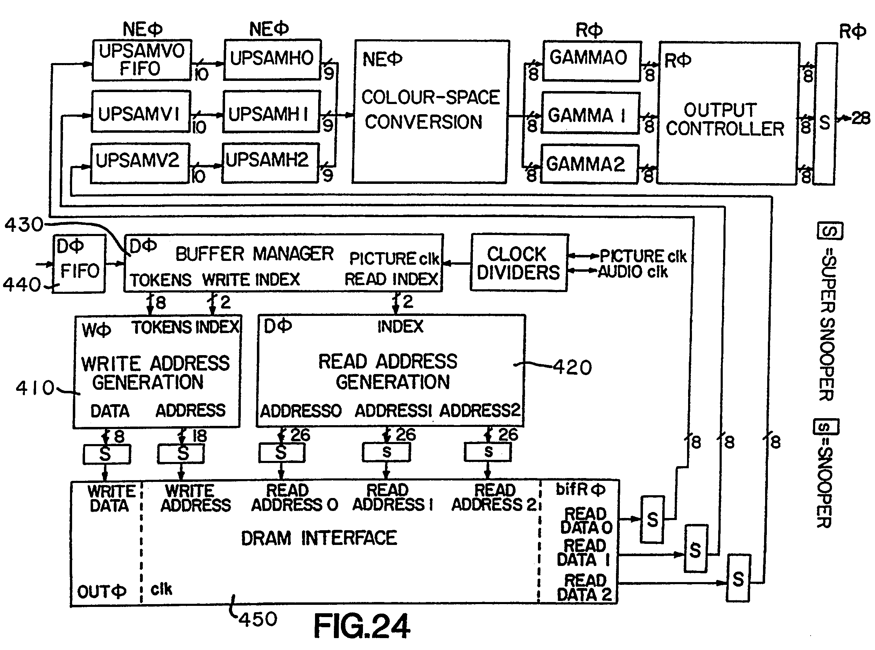

An image formatter is shown in Figure 24. There are two address generators, one for writing 410 and one for reading 420, a buffer manager 430 which supervises the two address generators 410 and 420 and provides frame-rate conversion, a data processing pipeline including vertical and horizontal upsamplers, colour-space conversion and gamma correction, and a final control block which regulates the output of the processing pipeline.

Tokens arriving at the input to the image formatter are buffered in the FIF0 440 and transferred into the buffer manager 430. This block detects the arrival of new pictures and determines the availability of a buffer in which to store each one. If there is a buffer available, It is allocated to the arriving picture and its index is transferred to the write address generator 410. If there is no buffer available, the incoming picture will be stalled until one does become free. All tokens are passed on to the write address generator 410. This operation is described in greater detail in U.K Serial No. 9405914.4 filed on March 24, 1994, which is incorporated herein by reference.

Each time the read address generator 420 receives a VSYNC signal from the display system, a request is made to the buffer manager 430 for a new display buffer index. If there is a buffer containing complete picture data, and that picture is deemed to be ready for display, that buffer's index will be passed to the display address generator. If not, the buffer manager sends the index of the last buffer to be displayed. At start-up, zero is passed as the index until the first buffer is full. A picture is deemed to be ready for display if its number (calculated as each picture is input) is greater than or equal to the picture number which is expected at the display (presentation number) given the encoding frame rate. The expected picture number is determined by counting picture clock pulses, where picture dock can be generated either locally by the clock dividers, or externally. This technology allows frame-rate conversion (e.g.2-3 pull-down).

External DRAM is used for the buffers, which can be either two or three in number. Three are necessary if frame-rate conversion is to be effected.

The purpose of the buffer manager 430 is to supply the address generators with indices indicating any of either two or three external buffers for writing and reading of picture data. The allocation of these indices is influenced by three principal factors, each representing the effect of one of the timing regimes in operation: the rate at which picture data arrives at the input to image formatter (coded data rate), the rate at which data is displayed (display data rate), and the frame rate of the encoded video sequence (presentation rate).

A three-buffer system enables the presentation rate and the display rate to differ (e.g. 2-3 pulldown), so that frames are either repeated or skipped as necessary to achieve the best possible sequence of frames given the timing constraints of the system. Pictures which present some difficulty in decoding may also be accommodated in a simliar way, so that if a picture takes longer than the available display time to decode, the previous frame will be repeated while everything else 'catches up'. In a two-buffer system the three timing regimes must be locked - it is the third buffer which provides the flexibility for taking up slack.

The buffer manager operates by maintaining certain status information associated with each external buffar - this includes flags indicating if the buffer is in use, full of data, or ready for display, and the picture number within the sequence of the picture currently stored in the buffer. The presentation number is also recorded, this being a number which increments every time a picture dock pulse is received, and represents the picture number which is currently expected for display based on the frame rate of the encoded sequence.

An arrival buffer (a buffer to which incoming data will be written) is allocated every time a PICTURE_START token is detected at the input, and this buffer is then flagged as IN_USE; on PICTURE_END, the arrival buffer will be de-allocated (reset to zero) and the buffer flagged as either FULL or READY depending on the relationship between the picture number and the presentation number.

The display address generator requests a new display buffer, once every vsync, via a two-wire-interface. If there is a buffer flagged as READY, then that will be allocated to display by the buffer manager. If there is no READY buffer, the previously displayed buffer will be repeated.

Each time the presentation number changes this is detected and every buffer containing a complete picture is tested for READY-ness by examining the relationship between its picture number and the presentation number. Buffers are considered in turn, and when any is deemed to be READY this automatically cancels the READY-ness of any which was previously flagged as READY, this then being flagged as EMPTY. This works because later picture numbers are stored, by virtue of the allocation scheme, in the buffers that are considered later.

TEMPORAL_REFERENCE tokens in H261 cause a buffer's picture number to be modified if skipped pictures in the input stream are indicated. TEMPORAL_REFERENCE tokens in MPEG have no effect.

A FLUSH token causes the input to stall until every buffer is either EMPTY or has been allocated as the display buffer; presentation number and picture number are then reset and a new sequence can commence.

All data is input to the buffer manager from the input fifo, bm_front. This transfer takes place via a two-wire interface, the data being 8 bits wide plus an extension bit. All data arriving at the buffer manager is guaranteed to be complete tokens, a necessity for the continued processing of presentation numbers and display buffer requests in the event of significant gaps in the data upstream.

Tokens (8 bit data, 1 bit extension) are transferred to the write address generator via a two-wire interface. The arrival buffer index is also transferred on the same interface, so that the correct index is available for address generation at the same time as the PICTURE_START token arrives at waddrgen.

The Interface to the read address generator comprises two separate two-wire interfaces which can be considered to act as 'request' and 'acknowledge' signals respectively - single wires are not adequate, however, because of the two two-wire-based state machines at either end.

The sequence of events normally associated with the dispaddr interface is as follows: dispaddr invokes a request, in response to a vsync from the display device, by asserting the drq-valid input to the buffer manager; when the buffer manager reaches an appropriate point in its state machine it will accept the request and go about allocating a buffer to be displayed; the disp_valid wire is then asserted, the buffer index is transferred, and this will normally be accepted immediately by dispaddr. There is an additional wire associated with this last two-wire-interface (rst_fld) which indicates that the field number associated with the current index must be reset regardless of the previous field number.

The buffer manager block uses four bits of microprocessor address space, to together with the 8-bit data bus and read and write strobes. There are two select signals, one indicating user-accessible locations and the other indicating test locations which should not require access under normal operation conditions.

The buffer manager is capable of producing two different events: index found and late arrival. The first of these is asserted when a picture arrives whose PICTURE_START extension byte (picture index) matches the value written into the BU_BM_TARGET_IX register at setup. The second event occurs when a display buffer is allocated whose picture number is less than the current presentation number, i.e. the processing in the system pipeline up to the buffer manager has not managed to keep up with the presentation requirements. Picture clock is the clock signal for the presentation number counter and is either generated on-chip or taken from an external source (norally the display system). The buffer manager accepts both of these signals and selects one based on the value of pclk_ext (a bit in the buffer managers control register). This signal also acts as the enable for the pad picoutpad, so that if the Image Formatter is generating its own picture clock this signal is also available as an output from the chip.

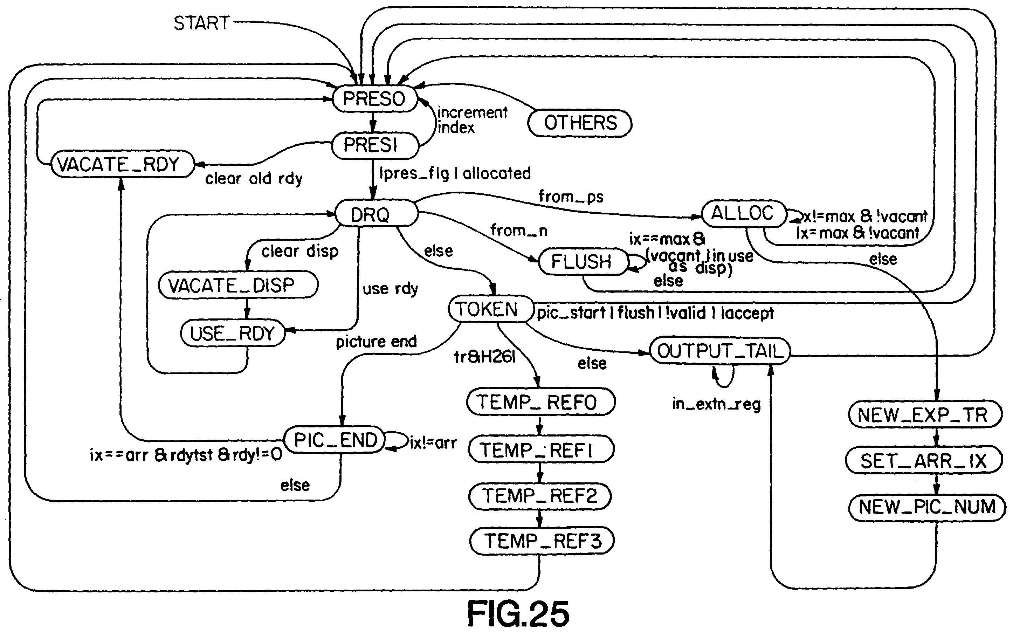

There are 19 states in the buffer managers state machine. These interact as shown in Figure 25. The reset state is PRESO, with flags set to zero such that the main loop is circulated initially.

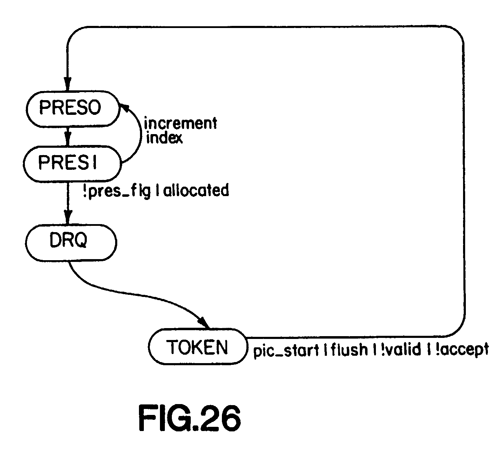

The main loop of the state machine comprises the states shown in Figure 26 (highlighted in the main diagram - Figure 25). States PRESO and PRES1 are concerned with detecting a picture clock via the signal presflg. Two cycles are allowed for the tests involved since they all depend on the value of rdytst. If a presentation flag is detected, all of the buffers are examined for possible 'readiness', otherwise the state machine just advances to state DRQ. Each cycle around the PRES0-PRES1 loop examines a different buffer, checking for full and ready conditions: if these are met, the previous ready buffer (if one exists) is cleared, the new ready buffer is allocated and its status is updated. This process is repeated until all buffers have been examined (index = = max buf) and the state then advances. A buffer is deemed to be ready for display when any of the following is true:
(pic_num > pres_num)&&((pic_num - pres_num) > = 128)
or
(pic_num < pres_num)&&((pres_num - pic_num) < = 128)
or
pic_num = = pres_num

State DRQ checks for a request for a display buffer (drq_valid_reg && disp_acc_reg). If there is no request the state advances (normally to state TOKEN - more on this later), otherwise a display buffer index is issued as follows: if there is no ready buffer, the previous index is re-issued or, if there is no previous display buffer, a null index (zero) is issued; if a buffer is ready for display, its index is issued and its state Is updated - if necessary the previous display buffer is cleared. The state machine then advances as before.

State TOKEN is the usual option for completing the main loop: if there is valid input and the output is not stalled, tokens are examined for strategic values (described in later sections), otherwise control returns to state PRES0.

Control only diverges from the main loop when certain conditions are met. These are described in the following sections.

If during the PRES0-PRES1 loop a buffer is determined to be ready, any previous ready buffer needs to be vacated because only one buffer can be designated ready at any time. State VACATE_RDY clears the old ready buffer by setting its state to VACANT, and it resets the buffer index to 1 so that when control returns to the PRES0 state, all buffers will be tested for readiness. The reason for this is that the index is by now pointing at the previous ready buffer (for the purpose of clearing it) and there is no record of our intended new ready buffer index - it is necessary therefore to re-test all of the buffers.

Allocation of the display buffer index takes place either directly from state DRQ (state USE_RDY) or via state VACATE_DISP which dears the old display buffer state. The chosen display buffer is flagged as IN_USE, the value of rdy_buf is set to zero, and the index is reset to 1 to return to state DRQ. disp_buf is given the required index and the two-wire interface wires (disp_valid and drq_acc) are controlled accordingly. Control returns to state DRQ only so that the decision between states TOKEN, FLUSH and ALLOC does not need to be made In state USE_RDY.

On receipt of a PICTURE_END token control transfers from state TOKEN to state PICTURE_END where, If the index is not already pointing at the current arrival buffer, It is set to point there so that its status can be updated. Assuming both out_acc_reg and en_full are true, status can be updated as described below; if not, control remains In state PICTURE_END until they are both true. The en_full signal is supplied by the write address generator to indicate that the swing buffer has swung, i.e. the last block has been successfully written and it is therefore safe to update the buffer status. The just-completed buffer is tested for readiness and given the status either FULL or READY depending on the resuit of the test. If it is ready, rdy_buf is given the value of its index and the set_la_ev signal (late arrival event) is set high (indicating that the expected display has got ahead in time of the decoding). The new value of arr_buf now becomes zero, and, if the previous reedy buffer needs its status clearing, the index is set to point there and control moves to state VACATE_RDY; otherwise index is reset to 1 and control returns to the start of the main loop.

When a PICTURE_START token arrives during state TOKEN, the flag from_ps is set, causing the basic state machine loop to he changed such that state ALLOC is visited instead of state TOKEN. State ALLOC is concerned with allocating an arrival buffer (into which the arriving picture data can be written), and cycles through the buffers until it finds one whose status is VACANT. A buffer will only be allocated if out_acc_reg is high, since it is output on the data two-wire-interface, so cycling around the loop will continue until this is the case. Once a suitable arrival buffer has been found, the index is allocated to arr_buf and its status is flagged as IN_USE. Index is set to 1, the flag from_ps is reset, and the state is at to advance to NEW_EXP_TR.A check is made on the picture's index (contained in the word following the PICTURE_START) to determine if it the same as targ_ix (the target index specified at setup) and, if so, set_if_ev (index found event) is set high.

The three states NEW_EXP_TR, SET_ARR_IX and NEW_PIC_NUM set up the new expected temporal reference and picture number for the incoming data - the middle state just sets the index to be err_buf so that the correct picture number register is updated (note that this_pnum is also updated). Control then goes to state OUTPUT_TAIL which outputs data (assuming favourable two-wire interface signals) until a low extension is encountered, at which point the main loop is re-started. This means that whole data blocks (64 items) are output, within which there are no tests for presentation flag or display request.

A FLUSH token in the data stream indicates that sequence information (presentation number, picture numbar, rst_fld) should be reset. This can only happen when all of the data leading up to the FLUSH has been correctly processed end so it is necessary, having received a FLUSH, to monitor the status of all of the buffers until it is certain that all frames have been handed over to the display, i.e. all but one of the buffers have status EMPTY, and the other is IN_USE (as the display buffer). At that point a 'new sequence' can safely be started.

When a FLUSH token is detected in state TOKEN, the flag from_fl is set, causing the basic state machine loop to be changed such that state FLUSH is visited instead of state TOKEN. State FLUSH examines the status of each buffer in turn, waiting fork to become VACANT or IN_USE as display. The state machine simply cycles around the loop until the condition is true, then increments its index and repeats the process until all of the buffers have been visited. When the last buffer fulfils the condition, presentation number, picture number and all of the temporal reference registers assume their reset values; rst_fld is set to 1. The flag from_fl is reset and the normal main loop operation is resumed.

When a TEMPORAL_REFERENCE token is encountered, a check is made on the H261 bit and, if set, the four states TEMP_REF0 to TEMP_REF3 are visited. These perform the following operations:
TEMP_REF0: temp_ref = in_data_reg;
TEMP_REF1: delta = temp_ref - exp_tr; index = arr_buf;
TEMP_REF2: exp_tr = delta + exp_tr;
TEMP_REF3: plc_num[i] = this_pnum + delta;index = 1;

State TOKEN passes control to state OUTPUT_TAIL in all cases other than those outlined above. Control remains here until the last word of the token is encountered (in_extn_reg is low) and the main loop is then re-entered.

The requirement to repeatedly check for the 'asynchronous' timing events of picture clock and display buffer request, and the necessary to have the buffer manager input stalled during these checks, means that when there is a continuous supply of data at the input to the buffer manager there will be a restriction on the data rate through the buffer manager. A typical sequence of states may be PRES0, PRES1, DRQ, TOKEN, OUTPUT_TAIL, each, with the exception of OUTPUT_TAIL, lasting one cycle. This means that for each block of 64 data items, there will be an overhead of 3 cycles during which the input is stalled (during states PRES0, PRES1 and DRQ) thereby slowing the write rate by 3/64 or approximately 5%. This number may occasionally increase to up to 13 cycles overhead when auxiliary branches of the state machine are executed under worst-case conditions. Note that such large overheads will only apply on a once-per-frame basis.

Presentation number free-runs during upi accesses; if presentation number is required to be the same when access is relinquished as it was when access was gained, this can be effected by reading presentation number after access is granted, and writing it back just before it is relinquished. Note that this is asynchronous, so it may be necessary to repeat the accesses several times to be sure they are effective.

The write address generator 410 receives tokens from the buffer manager 430 and detects the arrival of each new DATA token. As each arrives, it calculates a new address for the DRAM interface 450 in which to store the arriving block. The raw data is then passed to the DRAM interface 450 where it is written in to a swing buffer. Note that DRAM addresses are block addresses, and pictures in the DRAM are organised as rasters of blocks. Incoming picture data, however, is organised as sequences of macroblocks, so the address generation algorithm must take account of this.

### RAM INTERFACE

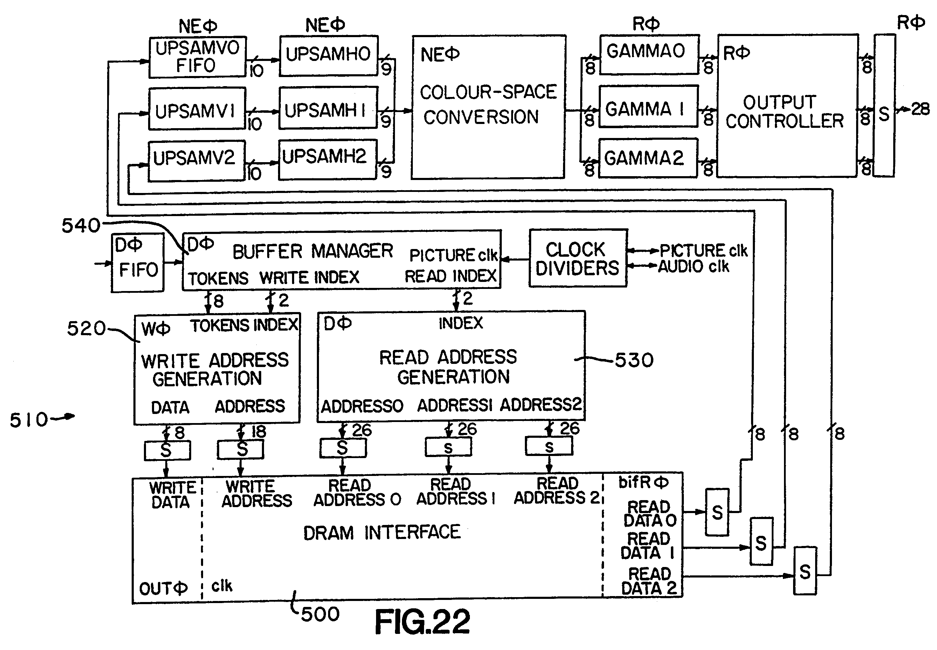

A single high performance, configurable DRAM interface 500 is illustrated In Fig. 22. This interface is a stardard-independent block and is designed to directly drive the DRAMs required, for example, by a spatial decoder, a temporal decoder and a video formatter. No external logic, buffers or components will be required to connect the DRAM interface to DRAM in those systems.

The operation of these and other components are described in greater detail in U.K. Serial No. 9405914.4 filed on March 24, 1994, which is incorporated herein by reference.

The interface is configurable in two ways. First, the detailed timing of the interface can be configured to accommodates variety of different DRAM types. Second, the width of the data interface to the DRAM can be corfigured to provide a cost/performance trade-off for different applications.

On each chip the DRAM interface connects the chip to external DRAM. External DRAM is used, because at present, it is not practical to fabricate on the chips the relatively large amount of DRAM needed. However, it is possible to fabricate on the chips the large amount of DRAM that is needed.

Although the DRAM interface is standard-independent, It still must be configured to implement each of the multiple standards, H.261, JPEG and MPEG. How the DRAM interface is reconfigured for multi-standard operation is discussed further herein.

An important aspect in understanding the operation of the DRAM interface 500 is to understand the relationship between the DRAM interface 500 and the address generator 510, and how the two communicate using the two wire interface. There are two address generators, one for writing 520 and one for reading 530. A buffer manager 540 supervises the two address generators 520 and 530. This buffer manager 540 is described in greater detail elsewhere in this application.

In brief, as its name implies, the address generator generates the addresses the DRAM interface needs to address the DRAM (e.g., to read from or to write to a particular address in DRAM). With a two-wire interface, reading and writing only occurs when the DRAM interface has both data (from preceding stages in the pipeline), and a valid address (from address generator). The use of a separate address generator simplifies the construction of both the address generator and the DRAM interface, as discussed further below.

The DRAM interface can operate from a clock which is asynchronous to both the address generator and to the clocks of the blocks which data is passed from and to. Special techniques have been used to handle this asynchronous nature of the operation.

Data is usually transferred between the DRAM interface and the rest of the chip in blocks of 64 bytes. Transfers take place by means of a device known as a "swing buffer". This is essentially a pair of RAMs operated in a double-buffered configuration, with the DRAM interface filling or emptying one RAM while another part of the chip empties-or fills the other RAM. A separate bus which carries an address from an address generator is associated with each swing buffer.

Each of the chips has four swing buffers, but the function of these swing buffers is different in each case. In the spatial decoder, one swing buffer is used to transfer coded data to the DRAM, another to read coded data from the DRAM, the third to transfer tokenised data to the DRAM and the fourth to read tokenised data from the DRAM. In the temporal decoder, one swing buffer is used to write intra or predicted picture data to the DRAM, the second to read intra or predicted data from the DRAM and the other two to read forward and backward prediction data. In the video formatter, one swing buffer issued to transfer data to the DRAM and the other three are used to read data from the DRAM, one for each of the luminance (Y) and the red and blue colour difference data (Cr and Cb).

The following section describes the operation of a DRAM interface which has one write swing buffer 502 and one read swing buffer 504.

A control 506 interfaces between the address generator 510, the DRAM interface 500, and the remaining blocks of the chip which supply and take the data are all two wire interfaces. The address generator 510 may either generate addresses as the resuit of receiving control tokens, or it may merely generate a fixed sequence of addresses. The DRAM interface 500 treats the two wire interfaces with the address generator 510 in a special way. Instead of keeping the accept line high when it is ready to receive and address, it waits for the address generator to supply a valid address, processes that address, and then sets the accept line high for one clock period. Thus it implements a request/acknowledge (REQ/ACK protocol.

A unique feature of the DRAM interface 500 is its ability to communicate independently with the address generator 510 and with the blocks which provide or accept the data. For example, the address generator 510 may generate an address associated with the data in the write swing buffer 502, but no action will be taken until the write swing buffer 502 signals that there is a block of data ready to be written to the external DRAM. Similarly, the write swing buffer 502 may contain a block of data which is ready to be written to the external DRAM, but no action is taken until an address is supplied on the appropriate bus from the address generator 510. Further, once one of the RAMs in the write swing buffer 502 has been filled with data, the other may be completely filled and "swung" to the DRAM interface side before the data input is stalled (the two-wire interface accept signal set low).

In understanding the operation of the DRAM interface 500, it is important to note that in a properly configured system, the DRAM interface 500 will be able to transfer data between the swing buffers 502 and 504 and the external DRAM at least as fast as the sum of all the average data rates between the swing buffers 502 and 504 and the rest of the chip.

Each DRAM interface 500 contains a method of determining which swing buffer it will service next. In general, this will either be a "round robin" (i.e. the swing buffer which is serviced is the next available swing buffer which has least recently had a turn) ore priority encoder, (i.e. in which some swing buffers have a higher priority than others). In both cases, an additional request will come from a refresh request generator which has a higher priority than all the other requests. The refresh request is generated from a refresh counter which can be programmed via a microprocessor interface.

The write swing buffer interface two blocks of RAM, RAM1 and RAM2. As discussed further herein, data is written into RAM 1 and RAM 2 from the previous block or stage, under control of the write address and control. From RAM1 and RAM 2, the data is written into DRAM. When writing data into DRAM, the DRAM row address is provided by the address generator, and the column address is provided by the write address and control, as described further herein. In operation, valid data is presented at the input (data in). The data is received from the previous stage. As each piece of data is accepted by the DRAM interface 500, it is written into RAM1 and the write address control increments the RAM1 address to allow the next piece of data to be written into RAM1. Data continues to be written into RAM1 until either there is no more data, or RAM1 is full. When RAM1 is full, the input side gives up control and sends a signal to the read side to indicate that RAM1 is now ready to be read. This signal passes between two asynchronous clock regimes, and so passes through three synchronizing flip flops.

Provided RAM2 is empty, the next item of data to arrive on the input side is written into RAM2, otherwise, this occurs when RAM2 has emptied. When the round robin or priority encoder (depending on which is used by the particular chip) indicates that it is the turn of this swing buffer to be read, the DRAM interface reads the contents of RAM1 and writes them to the external DRAM. A signal is then sent back across the asynchronous interface, to indicate that RAM1 is now ready to be filled again.

If the DRAM interface empties RAM1 and "swings" it before the input side has filled RAM2, then data can be accepted by the swing buffer continually. Otherwise when RAM2 is filled the swing buffer will set its accept single low until RAM1 has been "swung" back for use by the input side. The operation of a read swing buffer is similar, but with input and output data busses reversed.

The DRAM interface 500 is designed to maximize the available memory bandwidth. Each 8x8 block of data is stored in the same DRAM page. In this way, full use can be made of DRAM fast page access modes, where one row address is supplied followed by many column addresses. In particular, row addresses are supplied by the address generator 510, while column addresses are supplied by the DRAM interface 500, as discussed further below.

In addition, the facility is provided to allow the data bus to the external DRAM to be 8, 16 or 32 bits wide, so that the amount of DRAM used can be matched to size and bandwidth requirements of the particular application.

In this example, the address generator 510 provides the DRAM interface 500 with block addresses for each of the read and write swing buffers 505 and 502. This address is used as the row address for the DRAM. The six bits of column address are supplied by the DRAM interface itself, and these bits are also used as the address for the swing buffer RAM. The data bus to the swing buffers is 32 bits wide, so if the bus width to the external DRAM is less than 32 bits, two or four external DRAM accesses must be made before the next word is read from a write swing buffer or the next word is written to a read swing buffer (read and write refer to the direction of transfer relative to the external DRAM).

It should be recognized that the DRAM interface 500 is not limited to two swing buffers.

It will be appreciated that certain structural variations may suggest themselves to those skilled in the art The foregoing detailed description is to be clearly understood as given by way of illustration, the spirit and scope of this invention to be limited solely by the appended claims.

## Claims

1. An image formatter for processing encoded video data comprising:
an input element for receiving encoded data having a frame rate and an arrival rate;
a memory defining at least three buffers for storage of the encoded data, one of said buffers being a display buffer, and another of said buffers being an arrival buffer;
a write address generator for generating write addresses for data being stored thereat in said memory;
a read address generator for generating read addresses for reading data stored thereat in said memory;
an output interface linked to said read address generator that produces decoded data at a display rate ; and
a buffer manager responsive to said arrival rate, said display rate, and said frame rate for allocating said buffers to said write address generator and said read address generator, wherein said buffers are allocated to said write address generator in response to a timing regime.

2. The image formatter according to claim 1, in which said data arrive as a sequence of tokens at an encoded frame rate for output or display at a display frame rate, further comprising:
a presentation number counter;
wherein said buffer manager dynamically allocates and deallocates said at least three buffers as arrival buffers for reference by said write address generator, and as display buffers for reference by said read address generator, said buffer manager clearing said buffers for occupation by subsequently arriving data, and maintaining status information of said buffers, wherein said status information comprises a state VACANT, wherein a said buffer is available, a state IN_USE, wherein a said buffer can be referenced by said write address generator, a state FULL, wherein a said buffer is occupied by data, and a state READY wherein a said buffer is reallocated as a display buffer;
wherein responsive to said presentation number counter and a current picture number contained in the encoded data said buffer manager asserts a late arrival signal indicating that a buffer in said state READY is not in synchronization with said display frame rate;
said formatter further comprising a state machine for controlling said buffer manager, said state machine transitioning among a plurality of states, including:
a first transition from a first state PRES0, to a second state PRES1, wherein said status information of said buffers are evaluated;
a second transition from said state PRES1 to a third state DRQ wherein a pending request for said display buffer is evaluated; and
a third transition from said stage DRQ to a fourth state TOKEN, wherein tokens of received data are examined; whereby a status of said arrival buffer can be updated ; and
a plurality of 2-wire interfaces each comprising: a sender, a receiver, and a clock connected to said sender and said receiver, wherein data is transferred from said sender to said receiver upon a transition of said clock only when said sender is ready and said receiver is ready, wherein said buffer manager communicates with said read address generator, and with said write address generator via said 2-wire interfaces.

3. The image formatter according to claim 2, wherein said plurality of states of said state machine further comprises a fifth state VACATE_RDY, wherein a ready state of a said buffer is cleared.

4. The image formatter according to any one of claims 2 and 3, wherein said plurality of states of said state machine further comprises a sixth state VACATE_DISP, wherein a state of said display buffer is cleared.

5. The image formatter according to any one of claims 2 to 4, wherein said plurality of states of said state machine further comprises a seventh state USE_RDY, wherein allocation of a display buffer index occurs.

6. The image formatter according to any one of claims 2 to 5, wherein said plurality of states of said state machine further comprises an eighth state PICTURE_END, wherein an index is set to a current arrival buffer.

7. The image formatter according to any one of claims 2 to 6, wherein said plurality of states of said state machine further comprises a ninth state ALLOC, wherein an arrival buffer for new data is allocated.

8. The image formatter according to any one of claims 2 to 7, wherein said plurality of states of said state machine further comprises a tenth state NEW_EXP, an eleventh state NEW_PIC_NUM, wherein an expected temporal reference and picture number are set up for incoming data.

9. The image formatter according to any one of claims 2 to 8, wherein said plurality of states of said state machine further comprises a twelfth state SET_ARR_IX, wherein a picture number register is updated.

10. The image formatter according to any one of claims 2 to 9, wherein said plurality of states of said state machine further comprises a thirteenth state OUTPUT_TAIL, wherein data is output from the formatter.

11. The image formatter according to claim 2, wherein said tokens each comprise a plurality of data words, said data words each including an extension bit which indicates a presence of additional words in said token.

12. The image formatter according to claim 2, wherein said plurality of states of said state machine further comprises a fourteenth state FLUSH, wherein said buffers become vacant or enter a state of use for display.

13. The image formatter according to any one of claims 1 to 12, wherein said read address generator and said buffer manager are connected by a plurality of two-wire interfaces, wherein said two-wire interfaces each comprise: a sender, a receiver, and a clock connected to said sender and said receiver, wherein data is transferred from said sender to said receiver upon a transition of said clock only when said sender is ready and said receiver is ready.

14. The image formatter according to any one of claims 1 to 13, wherein said input element and said buffer manager are connected by a two-wire interface, wherein said two-wire interface comprises: a sender, a receiver, and a clock connected to said sender and said receiver, wherein data is transferred from said sender to said receiver upon a transition of said clock only when said sender is ready and said receiver is ready.

15. The image formatter according to any one of claims 1 to 14, wherein said write address generator and said buffer manager are connected by a two-wire interface, wherein said two-wire interface comprises: a sender, a receiver, and a clock connected to said sender and said receiver, wherein data is transferred from said sender to said receiver upon a transition of said clock only when said sender is ready and said receiver is ready.

16. The image formatter according to any one of claims 1 to 15, further comprising a setup register having a picture index stored therein, wherein said buffer manager asserts a first signal when received encoded data represents a picture having an index corresponding to said picture index, and wherein said buffer manager asserts a second signal when said display buffer has a picture number that is less than a current presentation number.

17. The image formatter according to claim 1, wherein said timing regime comprises an arrival rate of video data.

18. The image formatter according to claim 1, wherein said timing regime comprises an display rate of video data.

19. The image formatter according to claim 1, wherein said timing regime comprises an presentation rate of an encoded video sequence.
